# EUROPÄISCHE PATENTSCHRIFT

(11) **EP 2 731 539 B1**
(45) Veröffentlichungstag und Bekanntmachung des Hinweises auf die Patenterteilung: **08.03.2017**
(21) Anmeldenummer: 12746274.5
(22) Anmeldetag: 16.07.2012
(51) Int. Cl.: A61C 13/097

(54) **ZAHNERSATZ**
TOOTH REPLACEMENT
PROTHÈSE DENTAIRE

(30) Priorität: 14.07.2011 DE 202011103184 U
(43) Veröffentlichungstag der Anmeldung: 21.05.2014
(73) Patentinhaber: Wolfgang Arnold "Zähne & Kultur", 45355 Essen (DE)
(72) Erfinder: WOLFGANG, Arnold, 45355 Essen (DE); BROSCH, Volker, 45355 Essen (DE)
(74) Vertreter: Leinweber & Zimmermann
(86) Internationale Anmeldenummer: PCT/EP2012/002987
(87) Internationale Veröffentlichungsnummer: WO 2013/007397

(56) Entgegenhaltungen:
- EP-B1- 1 010 402
- US-A- 4 445 863
- US-A1- 2010 119 992
- US-A1- 2010 266 988

## Beschreibung

Die Erfindung betrifft einen Zahnersatz mit mindestens einem Seitenzahn mit einer mesialen Kontaktfläche, einer distalen Kontaktfläche und einer Okklusalfläche, wobei die Okklusalfläche mindestens einen bukkalen Höcker mit einer bukkalen Höckerspitze, einen lingualen Höcker mit einer lingualen Höckerspitze, eine die Okklusalfläche in mesio-distaler Richtung zwischen den beiden Höckern durchlaufende Zentralfissur mit mindestens einer Zahngrube, einen von der bukkalen Höckerspitze in Richtung auf die Zentralfissur abfallenden ersten Abhang und einen von der lingualen Höckerspitze in Richtung auf die Zentralfissur abfallenden zweiten Abhang aufweist.

Zähne dienen vor allem zum Zerkleinern der Nahrung, aber auch zum Sprechen. An den Zähnen unterscheidet man die Krone, die aus dem Zahnfleisch heraus in die Mundhöhle ragt, den Zahnhals und die ggf. geteilte Zahnwurzel, die endseitig eine Öffnung für Nerven besitzt. Als Zahnhals wird der Übergang zwischen der Zahnkrone und der Zahnwurzel bezeichnet.

Das aus Ober- und Unterkiefer bestehende Gebiß besteht aus Schneidezähnen, den Eckzähnen und den Seitenzähnen, also den Prämolaren und Molaren. Die Prämolaren sind niedriger aufgebaut und verfügen über eine zweihöckrige Krone, die Molaren weisen eine breite, bis zu 5-höckrige Krone auf.

Beim Zahnersatz werden künstliche Zahnkronen, ganze Ersatzzähne oder vollständige Prothesen verwendet, um so die Kaufunktion sicherzustellen.

Im Rahmen dieser Erfindung werden ganze Zähne und Zahnkronen als Zähne bezeichnet.

Herausnehmbarer Zahnersatz ist dann erforderlich, wenn ein Großteil der natürlichen Zähne nicht mehr vorhanden ist oder gar alle Zähne entfernt werden mußten. Solche Teil- oder Vollprothesen bestehen auch heute meist aus Kunststoff als Trägermaterial, in den die Ersatzzähne eingebettet sind.

Die herkömmlichen vereinfacht ausgeführten Ersatzzähne führen oft zu ungewohnten Bißeigenschaften, wobei besonders unangenehm hervortritt, daß das Kiefergelenk auf kleine Änderungen vom gewohnten Bewegungsablauf bereits reagiert, zeitweise aber auch auf Dauer auf den Einsatz des Zahnersatzes verzichtet wird.

Zur Lösung dieser Probleme im Stand der Technik wird in der EP 1 010 402 B1 ein Zahnersatz vorgeschlagen, bei dem die Ersatzzähne mit multifunktionalen Kauflächen nach natürlichem Vorbild ausgerüstet sind, ein vergrößertes Volumen aufweisen und einen ein Durchscheinen der Zahnhälse verhindernden bukkal abgesetzten Zahnhals aufweisen. Dabei können bei diesen bekannten Zähnen die Höcker der Zahnkronen eine Neigung aufweisen, die von den Prämolaren zu den Molaren abnimmt.

Der Offenbarungsgehalt der EP 1 010 402 B1 wird hiermit hinsichtlich der Ausbildung der Kauflächen und der Höckerneigung durch ausdrückliche Inbezugnahme in diese Beschreibung aufgenommen. Der Einsatz der in der genannten Schrift beschriebenen Zähne führt in vielen Fällen zu befriedigenden Bißeigenschaften. Es hat sich allerdings gezeigt, daß diese Bißeigenschaften im Laufe der Benutzungszeit der bekannten Zahnprothesen verlorengehen können.

Angesichts der beschriebenen Probleme im Stand der Technik liegt der Erfindung die Aufgabe zugrunde, einen verbesserten Zahnersatz bereitzustellen, mit dem die gewünschten Bißeigenschatten zuverlässig über einen langen Zeitraum sichergestellt werden können und der eine leichte und eindeutige Aufstellung ermöglicht.

Erfindungsgemäß wird diese Aufgabe durch eine Weiterbildung des bekannten Zahnersatzes gelöst, die im wesentlichen dadurch gekennzeichnet ist, daß die mesiale Kontaktftäche, die distale Kontaktfläche und/oder die Okklusalfläche gezielt eingearbeitete Freiräume zum Erhalt einer dynamischen okklusalen Führung aufweist, wobei der Zahnersatz die in Patentanspruch 1 genannten weiteren Merkmale aufweist.

Vorteilhafte Ausführungsformen der Erfindung sind in den abhängigen Ansprüchen dargestellt.

Durch den klaren okklusalen Aufbau, die effektive Okklusion und die gezielt eingearbeiteten Freiräume lassen sich die Seitenzähne gegenseitig leicht und eindeutig aufstellen. Im Rahmen der Erfindung werden die Zähne des Zahnersatzes darüber hinaus auch mit natürlichen Kauflächendimensionen ausgestattet Dabei sind die folgenden Merkmale erfindungsgemäßer Zähne von besonderer Bedeutung:
a. Retrusionsbahn
b. Weicher Übergang aus der Fissurenführung in die Höckerabhänge (alle Freiheitsgrade)
c. Protrusionsbahn
d. Stärkste Abstützung
e. Ersatzzahnkonform
f. Zahnhals abgesetzt
g. Approximale/interproximale Kontaktflächen
h. Funktionelle Ausrichtung für das Schloß
i. Verbessertes Niveau der zentralen Kontakte
j. Spezielle Höckerneigung

In den beigefügten Ansprüchen und der nachfolgenden Erläuterung der Erfindung wird von folgenden Definitionen Gebrauch gemacht:
- Linguale Höcker:: umfassen "innere Höcker" des Ober- als auch des Unterkiefers, also linguale und palatinale Höcker
- Bukkale Höcker:: umfassen "äußere Höcker" des Ober- als auch des Unterkiefers
- Transversalebene:: senkrecht zur Zahnachse verlaufende Schnittebene
- Frontalebene:: parallel zur Zahnachse verlaufende Schnittebene, die senkrecht zur mesio-distalen Achse des Zahns verläuft
- Sagittalebene:: parallel zur Zahnachse und in mesio-distaler Richtung verlaufende Schnittebene durch den Zahn
- Seitenzahn:: Molar oder Prämolar

Die Erfindung beruht auf der Erkenntnis, daß eine iatrogen-prothetische Okklusion nach falscher Bißnahme eine exzentrische, also destabilisierende Kondylenposition bzw. eine Kondylenverlagerung produziert. Beispielsweise wurde erkannt, daß ein falsches Bewegungsmuster, mit dem Endziel einer maximalen Okklusion, zu Lasten des Kiefergelenks geht, welches die eigene Positionierung nicht halten kann, sondern seine Position verläßt, um sich dem System anzupassen.

Im Rahmen der Erfindung ist "die neuronale Kontaktposition" auf dem Zahn der Ausgangs- und Endpunkt für die eingearbeiteten gezielten Freiräume in der Bewegung (Ablauf der Okklusion). Alle Bewegungen auf den Kauflächen sind für die Führung des Kiefergelenks in physiologischer Position aus einer effektiven zentralen IKP heraus schonend und bedeuten Entlastung für das gesamte System inklusive der Gelenke.

Mit dem erfindungsgemäßen Zahnersatz können alle Okklusionsbewegungen perfekt durchgeführt werden. Dabei wird von der Erkenntnis Gebrauch gemacht, daß die zentrische Kieferrelation, d. h. die physiologische Zuordnung des Unterkiefers zum Oberkiefer, in allen Bereichen der Prothetik entscheidend ist und eine zentrale Bedeutung für den Erfolg der prothetischen Versorgung hat.

Der erfindungsgemäße Zahnersatz sichert diese physiologische Position der Kiefergelenke in der IKP und damit des stomatognathen Systems als Ganzes. Die Schlüssel (rechtes und linkes Kiefergelenk) finden ihre korrekte Okklusionsposition, fixiert durch das okklusale Schloß, zu den richtigen funktionellen Seitenzähnen (FZ). Diese werden dann die Schlüssel im Kiefergelenk im Zusammenspiel mit der Neuromuskulatur in ihrer Sollposition halten (physiologische Position).

Bei der okklusalen Reliefgestaltung von Prothesenzähnen ist es wichtig, keine verschlüsselte Punkt-zu-Punkt-Verzahnung zu erreichen, sondern dem Patienten durch einen geringen Gleitspielraum im Sinne einer dynamischen Okklusion die Möglichkeit einer neuro-muskulären Einstellung seiner programmierten physiologischen Kiefergelenkszentrik zu geben.

Die Vorgaben für die Gestaltung von erfindungsgemäßem Zahnersatz sind unter Verwendung einer additiven Aufwachstechnik in einem volljustierbaren Artikulator "Typ Protar" gestaltet worden. Maßgaben aus wissenschaftlichen Untersuchungen wurden empirisch in eine gewachste Form umgesetzt und nach ersten Tests zur Überprüfung der geforderten funktionalen Freiheiten der Quadranten gegeneinander im Labor digitalisiert und aus PMMA Kunststoff herausgefräst. Dieser Prozeß gestattet die Optimierung der Kauflächen nach wissenschaftlichen Gesichtspunkten. Dabei trägt eine gute zentrische Zuordnung der Kieferhälften zur Fixierung einer gesunden Kiefergelenksposition bei.

Im Rahmen der Erfindung bieten die geschlossenen Zahnreihen trotz aller Freiheit eine gesicherte zentrische Abstützung der Zahnreihen gegeneinander. Der Blick auf die rechten Kieferhälften von dorsal zeigt deutlich, daß sowohl in der Phase des Schließens der Kiefer als auch bei Mediotrusionsbewegungen die Prothesenzähne gleithindernisfrei funktionieren.

Der erfindungsgemäße Zahnersatz wurde mit dem Ziel einer dynamischen okklusalen Führung zur Verbesserung der Kauleistung, Stabilisierung der Prothesen, angenehmeren Tragekomfort und Reduzierung der Gefahr von Druckstellen entwickelt, wodurch das besondere Okklusions-Konzept zum Vorschein gekommen ist. Die Bewegungen auf dem erfindungsgemäßen Zahnersatz verlaufen flüssig, ohne Unterbrechungen, bei korrekten Aufstellungsangaben ohne Einschleifen, sehr gleichmäßig, rechts- wie linksseitig. Es ist möglich, prothetische Versorgungen anzufertigen, die auf funktionalem und ästhetischem Höchstniveau liegen.

Der erfindungsgemäße Zahnersatz wurde durch die Entwicklung und Nutzung eines Systems zur Vermessung der Kieferbewegungen gewonnen. Es wurde ein Zahnersatz geschaffen, der diesen wissenschaftlichen Erkenntnissen Rechnung trägt. Die wissenschaftlichen Vorgaben wurden empirisch in eine gewachste Form umgesetzt und nach ersten Tests zur Überprüfung der geforderten funktionalen Freiheiten der Quadranten gegeneinander im Labor digitalisiert und aus PMMA Kunststoff herausgefräst. Mit diesen Prototypen wurden in einem wissenschaftlichen Versuch Messungen und Tests mit der Fragestellung nach Funktionstüchtigkeit im Sinne der beschriebenen Erkenntnisse durchgeführt und dokumentiert. Die dabei gewonnenen Daten und Fakten sind in eine Überarbeitung der Prototypform eingeflossen und wurden danach erneut überprüft. Dadurch gelang die erfindungsgemäße Optimierung der Kauflächen nach wissenschaftlichen Gesichtspunkten.

Gemäß einem weiteren Aspekt der Erfindung weist der Zahnersatz mindestens zwei nebeneinander angeordnete Zähne, insbes. Seitenzähne auf, von denen einer mit einer mesialen Kontaktfläche an eine distale Kontaktfläche eines anderen Zahn anlegbar ist, wobei die mesiale (distale) Kontaktfläche kalottenartig bzw. sphärisch konvex gewölbt ist, also sowohl in einer Sagittalschnittebene als auch in einer Transversalschnittebene konvex berandet ist, und die distale (mesiale) Kontaktfläche zur Herstellung eines formschlüssigen Kontakts mit der konvex gewölbten Kontaktfläche konkav sphärisch gewölbt ist, also sowohl in einer Sagittalschnittebene als auch in einer Transversalschnittebene konkav berandet ist.

Die aneinander anlegbaren mesialen und distalen Kontaktflächen sind also etwa kugelschalensegmentförmig ausgeführt, so dass in allen Zahnpositionen zueinander ein formschlüssiger Kontakt gewährleistet wird. Dadurch wird einerseits die Anpassung des Zahnersatzes an die spezielle Anatomie des Patienten ermöglicht, andererseits wird in allen Zahnpositionen ein formschlüssiger Kontakt zwischen benachbarten Zähnen im Bereich der mesialen und distalen Kontaktflächen hergestellt, so dass die gewünschte anatomisch vorgegebene Zahnstellung zuverlässig erhalten werden kann. Ein bei herkömmlichem Zahnersatz bisweilen beobachtetes Auslockern einzelner Zähne im Kunststoffträger wird durch die erfindungsgemäße Weiterbildung der mesialen und distalen Kontaktflächen zuverlässig ausgeschlossen.

In diesem Zusammenhang hat es sich als besonders zweckmäßig erwiesen, wenn der Krümmungsradius der konvex gewölbten Kontaktfläche, welche vorzugsweise die mesiale Kontaktfläche ist, etwa dem Krümmungsradius der konkav gewölbten Kontaktfläche entspricht, wobei die konkav gewölbte Kontaktfläche vorzugsweise durch die distale Kontaktfläche gebildet ist.

Überraschenderweise hat sich gezeigt, dass die bestmögliche Verankerung der Zähne im Basismaterial erreicht wird, wenn der Zahnhals mindestens eines Zahns derart abgesetzt ist, dass zwischen Zahnkrone und Zahnwurzel ein rückspringender Absatz gebildet ist. Mithin verringert sich der Zahnquerschnitt ausgehend von der Zahnkrone in Richtung auf die Zahnwurzel im Bereich des Zahnhalses stufenartig. Der durch die stufenartige Verringerung des Gluerschnitts bewirkte geringere Halt bei seitlich wirkenden Kräften wird überraschenderweise durch die Auflage des Übergang von Zahnkrone auf Zahnwurzel im Zahnbereich im Bereich der Stufen mehr als ausgeglichen, so dass insgesamt eine verbesserte Verankerung des Zahns im Basismaterial erhalten wird. Zusätzlich wird durch den abgesetzten Zahnhals das Durchscheinen der Zahnhälse durch den Kunststoffträger verhindert.

Im Rahmen der Erfindung wird unter einem rückspringenden Absatz zwischen Zahnkrone und Zahnwurzel ein Absatz verstanden, der so beschaffen ist, dass eine Verbindungslinie zwischen einer Begrenzungsfläche der Zahnwurzel und der Zahnkrone im Bereich der Zahnhalses außerhalb des Zahnkörpers verläuft.

Ein besonders zuverlässiger Halt der Ersatzzähne im Trägermaterial wird erreicht, wenn der Absatz zwischen Zahnkrone und Zahnwurzel den Zahn vollständig umlaufend ausgeführt ist, so dass im Bereich des Übergangs zwischen Zahnkrone und Zahnwurzel eine umlaufende Auflagefläche des Zahns auf dem Trägermaterial gebildet ist.

Die Erfindung lässt sich mit besonderem Vorteil bei vollständigen Ersatzzähnen benutzen. Die beschriebene Variabilität bei der Anpassung der Ersatzzähne an die anatomischen Gegebenheiten des Patienten lässt sich allerdings auch schon erzielen, wenn Kronen benachbarter Zähne mit approximalen Kontaktflächen ausgeführt sind, von denen eine konvex gewölbt ist und die andere zur Herstellung eines formschlüssigen Kontakts konkav gewölbt ist. Die Form der approximalen Kontaktflächen ist bei einem erfindungsgemäßen Zahnersatz für einen formschlüssigen Kontakt optimiert und damit im Vergleich zu den approximalen Kontaktflächen natürlicher Zähne vergrößert.

Der bei einer bevorzugten Ausführungsform der Erfindung zum Einsatz kommende zirkulär abgesetzte Zahnhals verbessert die Befestigung in der Basis und erleichtert die Papillengestaltung.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
Fig. 1 eine Ausführungsform des erfindungsgemäßen Zahnersatzes von vorne (Fig. 1 a) und von hinten (Fig. 1 b),
Fig. 2 die Okklusalflächen von Seitenzähnen (Molaren und Prämolaren) des erfindungsgemäßen Zahnersatzes,
Fig. 3 Seitenansichten der linken und der rechten Kieferseite in der "neuronalen Kontaktposition",
Fig. 4 einen Blick auf die rechte Kieferhälfte von dorsal sowohl in der Phase des Schließens der Kiefer (Fig. 4a) als auch in geschlossener Stellung (Fig. 4b),
Fig. 5 einen Blick auf die linke Kieferhälfte von dorsal sowohl in der Phase des Schließens der Kiefer (Fig. 5a) als auch in geschlossener Stellung (Fig. 5b),
Fig. 6 die Okklusafflächen der Seitenzähne des erfindungsgemäßen Zahnersatzes,
Fig. 7 eine okklusale Ansicht, eine linguale Ansicht und eine basale Ansicht eines in Form einer Zahnreihe ausgeführten erfindungsgemäßen Zahnersatzes (zweite Ausführungsform),
Fig. 8 weitere Seitenansichten der ersten Ausführungsform des erfindungsgemäßen Zahnersatzes, und
Fig. 9 die Okklusalflächen der einzelnen Seitenzähn der ersten Ausführungsform des erfindungsgemäßen Zahnersatzes.

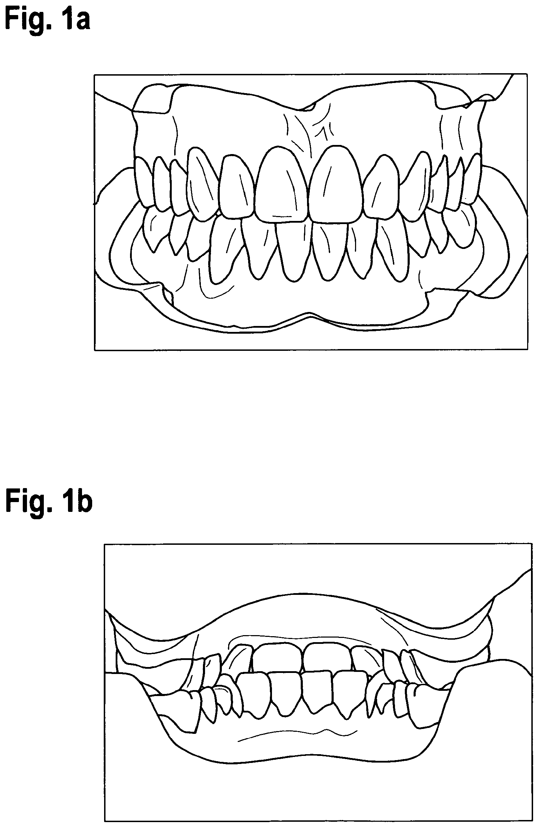

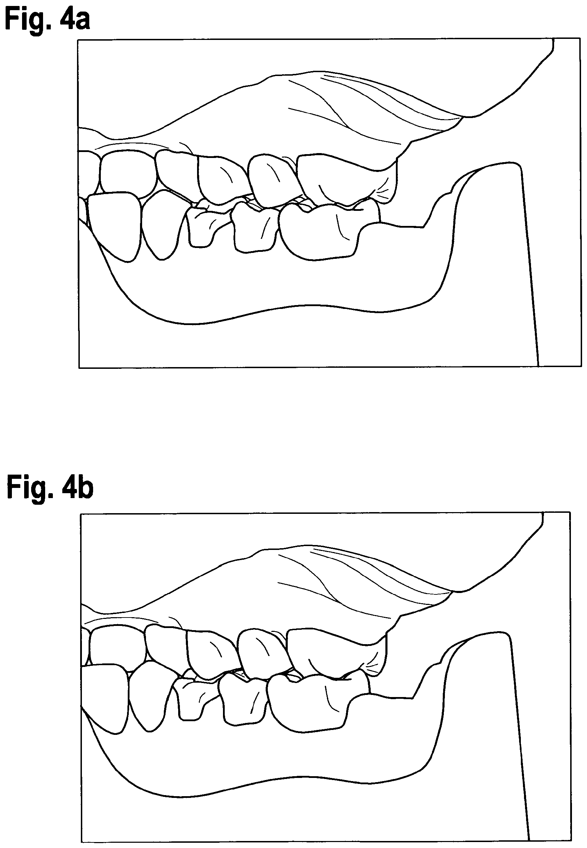

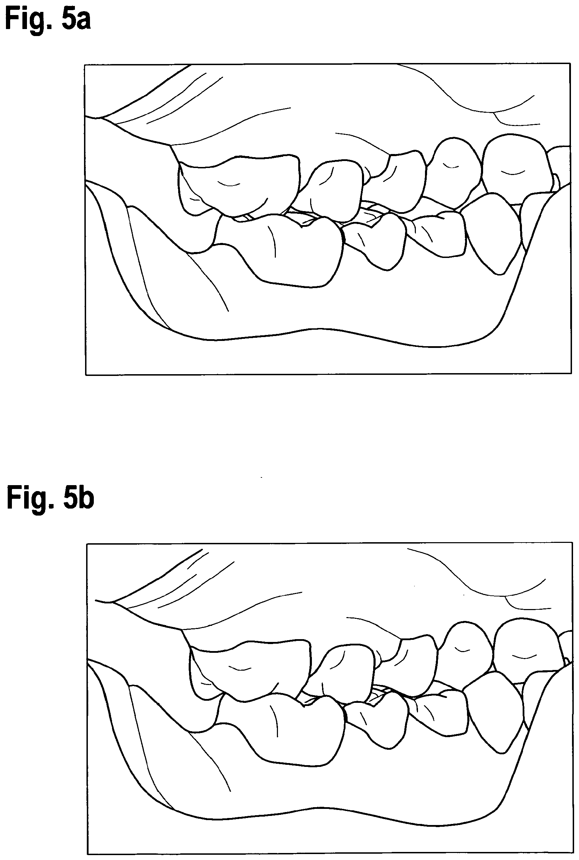

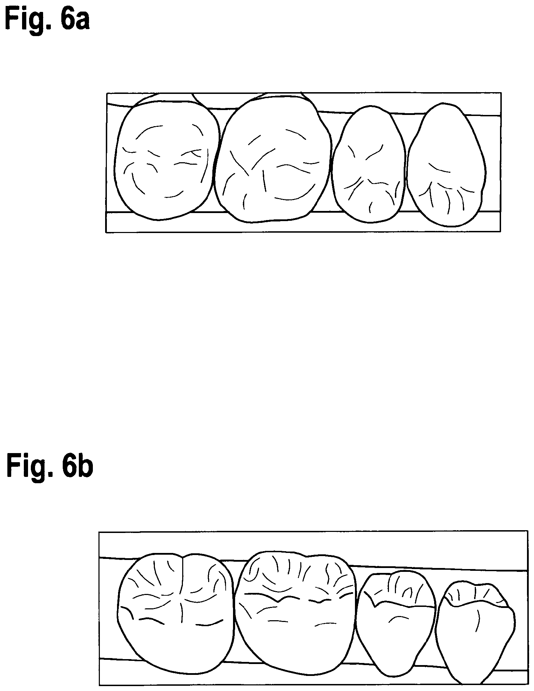

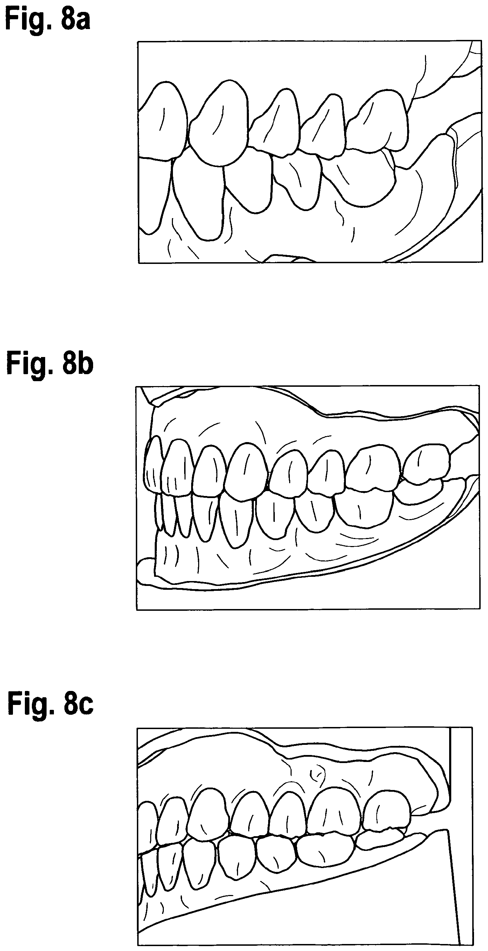

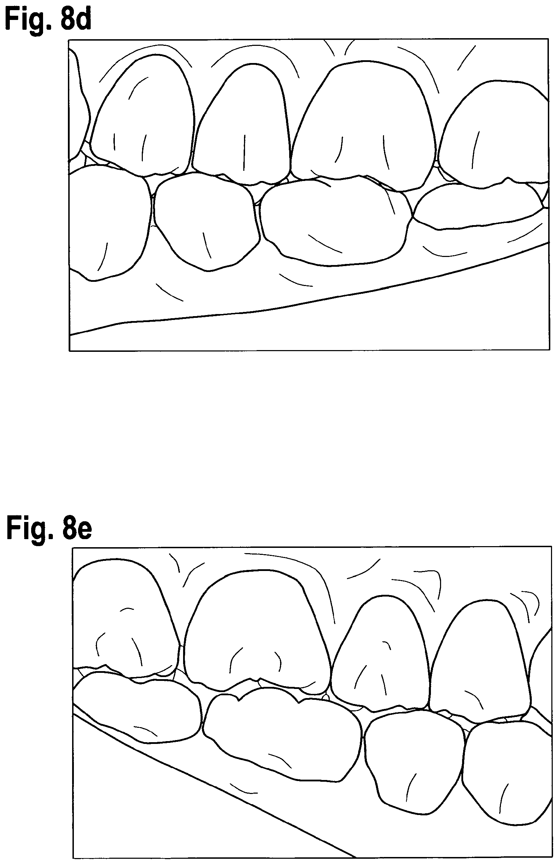

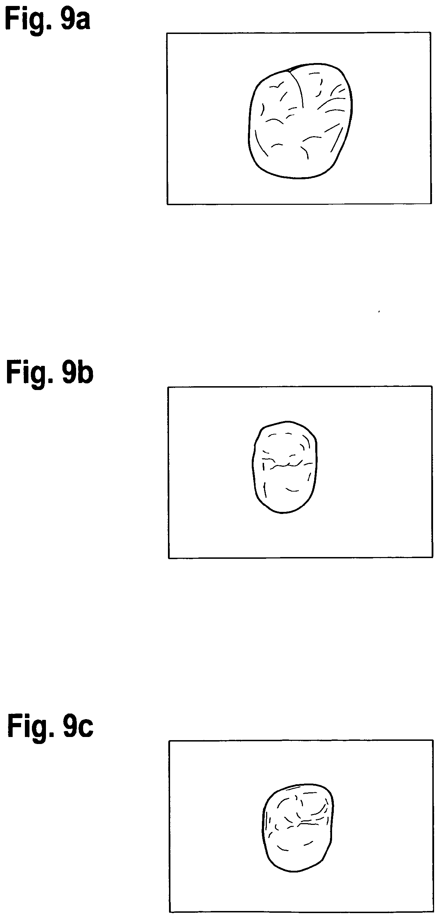

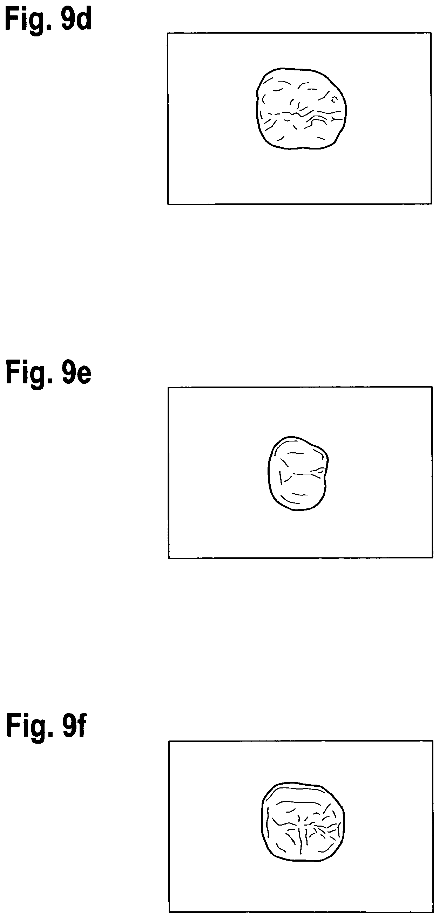

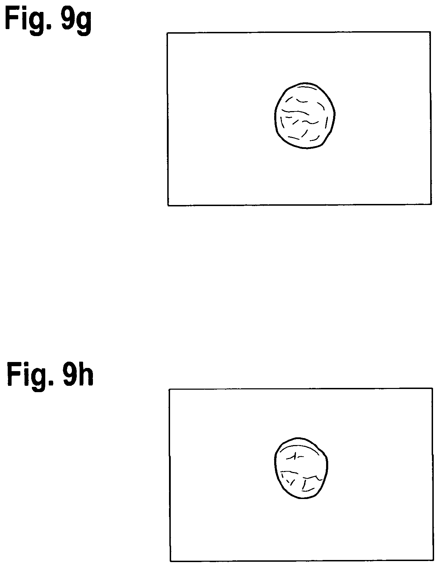

Die Figuren 1 bis 6, 8 und 9 zeigen verschiedene Ansichten einer ersten Ausführungsform des erfindungsgemäßen Zahnersatzes.

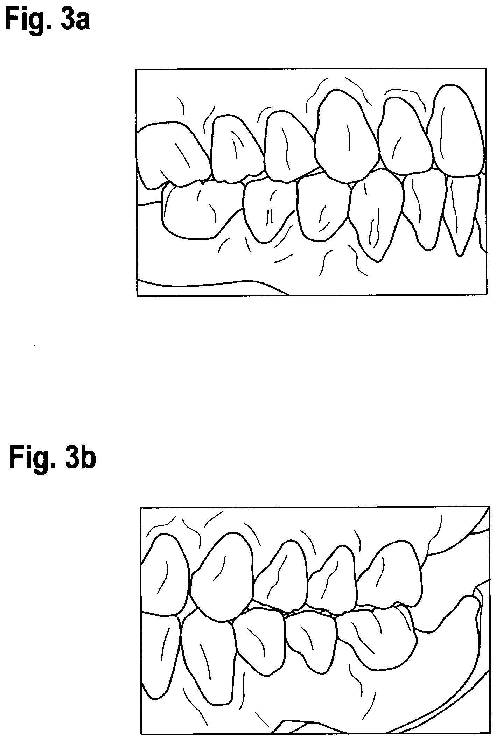

Die erfindungsgemäß in die Okklusalflächen eingearbeiteten gezielten Freiräume können den in den Figuren 3 bis 5 und 8 dargestellten Seitenansichten besonders deutlich entnommen werden.

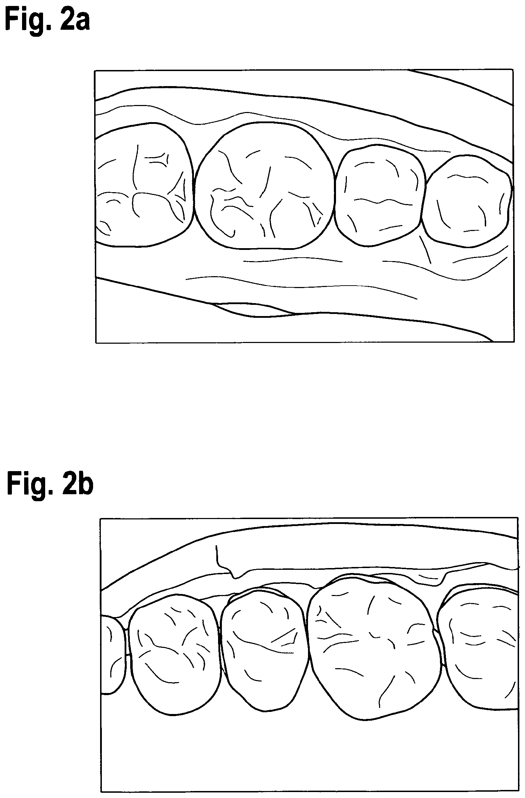

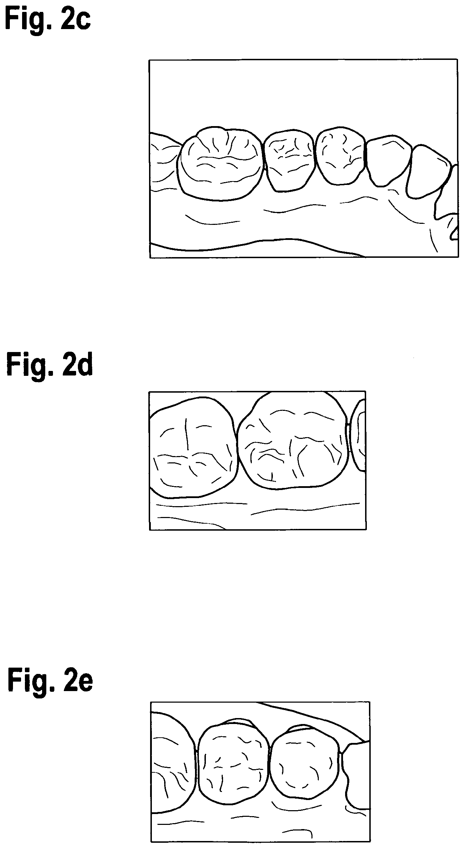

Die Gestaltung der Okklusalflächen der Seitenzähne des erfindungsgemäßen Zahnersatzes ist in den Figuren 2, 6 und 9 besonders gut dargestellt.

Folgende in den Ansprüchen angegebene Merkmale sind in den Figuren dargestellt: Der Fissurgrund ist nur relativ schwach gekrümmt. Dies führt zu einem weichen Übergang zwischen Abhängen und Zentralfissur. Außerdem ist der Grund der Zahngrube nur relativ schwach gekrümmt.

Die Okklusalflächen sind in einer durch die Höcker verlaufenden Frontalebene ausgehend von dem ersten Abhang über die Zentralfissur bis zu dem zweiten Abhang durchgehend konkav gekrümmt. Mit anderen Worten weist die Zentralfissur keine konvex gekrümmten Bereiche auf, so dass in Okklusionsstellung keine verschlüsselte Punkt-zu-Punkt-Verzahnung erreicht wird, sondern dem Patienten durch einen geringen Gleitspielraum im Sinne einer dynamischen Okklusion die Möglichkeit einer neuro-muskulären Einstellung seiner Kiefergelenkszentrik ermöglicht ist.

Des Weiteren weisen die Abhänge keine Bereiche mit starker Steigung in Richtung auf die Höckerspitzen auf. Dies führt zu einer dynamischen Okklusion bei Laterotrusionsbewegungen.

Die Zentralfissur hat über die volle Zahnbreite eine Mindesttiefe. Dies führt zu einer dynamischen Okklusion bei Protrusion und Retrusion. Andererseits ist die Grube in Relation zur Zahnbreite nicht besonders tief, was zu einem gleithindernisfreien Funktionieren der Prothesezähne führt. Der tiefste Punkt der Zahngrube ist nicht der Punkt der stärksten Krümmung der Grube. Mit anderen Worten ist die Zahngrube am Boden flach. Dies erleichtert eine dynamische Gleitbewegung ausgehend von der Okklusionsstellung.

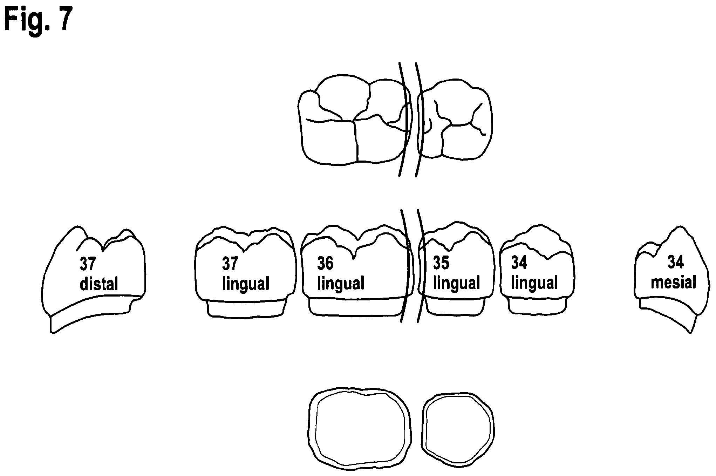

In Fig. 7 ist besonders deutlich dargestellt, dass die mesiale Kontaktfläche des Zahnes 36 konvex gewölbt ausgeführt ist, so dass sie formschlüssig zur distalen Kontaktfläche des Zahnes 35 passt. Alle Zähne der Zahnreihe der Fig. 7 weisen einen zirkulär umlaufend abgesetzten Zahnhals auf, so dass sich die Schnittfläche der Zähne ausgehend von der Zahnkrone in Richtung auf die Zahnwurzel an einem im Bereich des Zahnhalses ausgeführten Absatz stufenartig verringert.

## Patentansprüche

1. Zahnersatz mit mindestens einem Seitenzahn mit einer mesialen Kontaktfläche, einer distalen Kontaktfläche und einer Okklusalfläche, wobei die Okklusalfläche mindestens einen bukkalen Höcker mit einer bukkalen Höckerspitze, einen lingualen Höcker mit einer lingualen Höckerspitze, eine die Okklusalfläche in mesio-distaler Richtung zwischen den beiden Höckern durchlaufende Zentralfissur mit mindestens einer Zahngrube, einen von der bukkalen Höckerspitze in Richtung auf die Zentralfissur abfallenden ersten Abhang und einen von der lingualen Höckerspitze in Richtung auf die Zentralfissur abfallenden zweiten Abhang aufweist, wobei die mesiale Kontaktfläche, die distale Kontaktfläche und/oder die Okklusalfläche Freiräume zum Erhalt einer dynamischen okklusalen Führung aufweist, wobei die distale und/oder die mesiale Kontaktfläche kalottenartig bzw. sphärisch gewölbt ist, also sowohl in einer Sagittalschnittebene als auch in einer Transversalschnittebene konvex berandet ist, **gekennzeichnet durch** einen Antagonisten des Seitenzahns mit einer weiteren Okklusalfläche mit mindestens einem weiteren Höcker, der in einer Okklusionsstellung in die Zahngrube der Okklusalfläche des Seitenzahns eingreift, wobei die Länge der Retrusionsbahn ausgehend von der Okklusionsstellung mindestens 0,6 mm bis 0,8 mm beträgt.

2. Zahnersatz nach Anspruch 1, **dadurch gekennzeichnet, dass** die Freiräume als sich in Normalenrichtung zu einer an die distale Kontaktfläche, die mesiale Kontaktfläche und/oder die Okklusalfläche angelegten Tangentialebene erstreckende Profilierungen ausgeführt sind.

3. Zahnersatz nach Anspruch 1 oder 2, **dadurch gekennzeichnet, dass** in allen durch die Zentralfissur verlaufenden Frontalebenen der Krümmungsradius der Okklusalfläche am Grund der Zentralfissur grösser ist als ein Siebtel, bevorzugt grösser als ein Fünftel, besonders bevorzugt grösser als ein Viertel des Abstands zwischen den beiden Höckerspitzen, so dass sich ein weicher Übergang zwischen dem ersten Abhang, der Zentralfissur und dem zweiten Abhang ergibt.

4. Zahnersatz nach Anspruch 3, **dadurch gekennzeichnet, dass** in allen parallel zur Zahnachse durch den Grund der Zahngrube verlaufenden Schnittebenen der Krümmungsradius der Okklusalfläche am Grund der Zahngrube grösser als 1,2 mm, bevorzugt grösser als 2 mm und/oder kleiner als 5 mm, bevorzugt kleiner als 4 mm ist.

5. Zahnersatz nach einem der vorhergehenden Ansprüche, **dadurch gekennzeichnet, dass** die Okklusalfläche in einer durch die Höcker verlaufenden Frontalebene ausgehend von dem ersten Abhang über die Zentralfissur bis zu dem zweiten Abhang durchgehend konkav gekrümmt ist.

6. Zahnersatz nach einem der vorhergehenden Ansprüche, **dadurch gekennzeichnet, dass** in allen durch die Zentralfissur verlaufenden Frontalebenen der maximale Steigungswinkel des ersten und/oder des zweiten Abhangs gegenüber einer Transversalebene weniger als 40°, bevorzugt weniger als 35°, insbesondere weniger als 30° und/oder mehr als 20°, bevorzugt mehr als 25° beträgt.

7. Zahnersatz nach einem der vorhergehenden Ansprüche, **dadurch gekennzeichnet, dass** in allen durch die Zentralfissur verlaufenden Frontalebenen der Abstand zwischen dem Grund der Zentralfissur und der durch die höchste Höckerspitze verlaufenden Transversalebene grösser ist als 0,3 mm, bevorzugt grösser ist als 0,4 mm, insbesondere grösser ist als 0,5 mm und kleiner ist als 1,5 mm, bevorzugt kleiner als 1 mm.

8. Zahnersatz nach einem der vorhergehenden Ansprüche, **dadurch gekennzeichnet, dass** der Abstand zwischen den beiden Höckerspitzen mehr als 4 mal, bevorzugt mehr als 5 mal, insbesondere mehr als 6 mal so gross ist und weniger als 15 mal, bevorzugt weniger als 10 mal so gross ist wie der Abstand zwischen einer durch den Grund der Zahngrube verlaufenden Transversalebene und einer durch den höchsten Höcker verlaufenden Transversalebene.

9. Zahnersatz nach einem der vorhergehenden Ansprüche, **dadurch gekennzeichnet, dass** in einer durch den Grund der Zahngrube verlaufenden Frontalebene der Krümmungsradius der Okklusalfläche ausgehend von dem Grund der Zahngrube in Richtung auf den Rand der Zahngrube zumindest abschnittsweise zunimmt.

10. Zahnersatz nach einem der vorhergehenden Ansprüche, **dadurch gekennzeichnet, dass** die Länge der Protrusionsbahn ausgehend von der Okklusionsstellung 0,4 mm bis 0,6 mm beträgt.

11. Zahnersatz nach Anspruch 10, **dadurch gekennzeichnet, dass** der Höcker des Antagonisten in der Okklusionsstellung die Okklusalfläche des Seitenzahns im Bereich der Zahngrube nicht punktweise, sondern flächig berührt, wobei die Berührungsfläche " vorzugsweise mehr als 0,5 mm², besonders bevorzugt mehr als 1 mm² und/oder weniger als 3 mm², bevorzugt weniger als 2 mm² beträgt.

12. Zahnersatz nach einem der vorhergehenden Ansprüche, **gekennzeichnet durch** einen Nachbarzahn des Seitenzahns mit einer weiteren mesialen (distalen) Kontaktfläche, die an der distalen (mesialen) Kontaktfläche des Seitenzahns anliegt, wobei die weitere mesiale (distale) Kontaktfläche des Nachbarzahns zur Herstellung eines formschlüssigen Kontakts mit der konvex gewölbten distalen (mesialen) Kontaktfläche des Seitenzahns konkav sphärisch gewölbt ist, also sowohl in einer Sagittalschnittebene als auch in einer Transversalschnittebene konkav berandet ist.

13. Zahnersatz nach Anspruch 12, **dadurch gekennzeichnet, dass** der Krümmungsradius der konvex gewölbten Kontaktfläche des Seitenzahns etwa dem Krümmungsradius der konkav gewölbten weiteren Kontaktfläche des Nachbarzahns entspricht.

14. Zahnersatz nach einem der vorhergehenden Ansprüche, **dadurch gekennzeichnet, dass** der Zahnhals des Seitenzahns derart abgesetzt ist, dass zwischen Zahnkrone und Zahnwurzel ein rückspringender Absatz gebildet ist, wobei der Absatz den Seitenzahn bevorzugt vollständig umläuft.

15. Zahnersatz nach einem der Ansprüche 1 bis 11, **gekennzeichnet durch** mindestens zwei nebeneinander angeordnete Zähne, insbes. Molaren und/oder Prämolaren, von denen einer mit einer mesialen Kontaktfläche an eine distale Kontaktfläche eines anderen Zahn anlegbar ist, wobei die mesiale (distale) Kontaktfläche kalottenartig bzw. sphärisch konvex gewölbt ist, also sowohl in einer Sagittalschnittebene als auch in einer Transversalschnittebene konvex berandet ist, und die distale (mesiale) Kontaktfläche zur Herstellung eines formschlüssigen Kontakts mit der konvex gewölbten Kontaktfläche konkav sphärisch gewölbt ist, also sowohl in einer Sagittalschnittebene als auch in einer Transversalschnittebene konkav berandet ist.

## Claims

1. A tooth replacement comprising at least one posterior tooth that has a mesial contact surface, a distal contact surface and an occlusal surface, the occlusal surface comprising at least one buccal cusp with a buccal cusp tip, a lingual cusp with a lingual cusp tip, a central fissure which has at least one tooth pit and passes through the occlusal surface in a mesiodistal direction between the two cusps, a first gradient which slopes downward from the buccal cusp tip in the direction of the central fissure and a second gradient which slopes downward from the lingual cusp tip in the direction of the central fissure, the mesial contact surface, the distal contact surface and/or the occlusal surface having free spaces for receiving a dynamic occlusal guide, the distal and/or the mesial contact surface being curved in a calotte-like or spherical manner, i.e. having a convex edge both in a sagittal sectional plane and in a transverse sectional plane, **characterised by** an antagonist of the posterior tooth that has a further occlusal surface with at least one further cusp which engages in an occlusion position with the tooth pit of the occlusal surface of the posterior tooth, the length of the retrusion path starting from the occlusion position being at least 0.6 mm to 0.8 mm.

2. The tooth replacement according to Claim 1, **characterised in that** the free spaces are implemented as profilings extending in a normal direction to a tangential plane positioned against the distal contact surface, the mesial contact surface and/or the occlusal surface.

3. The tooth replacement according to Claim 1 or 2, **characterised in that** in all of the frontal planes running through the central fissure the radius of curvature of the occlusal surface at the base of the central fissure is greater than one seventh, preferably greater than one fifth, particularly preferably greater than one quarter of the distance between the two cusp tips, resulting in a smooth transition between the first gradient, the central fissure and the second gradient.

4. The tooth replacement according to Claim 3, **characterised in that** in all of the sectional planes running parallel to the tooth axis through the base of the tooth pit the radius of curvature of the occlusal surface at the base of the tooth pit is greater than 1.2 mm, preferably greater than 2 mm and/or smaller than 5 mm, preferably smaller than 4 mm.

5. The tooth replacement according to any of the preceding claims, **characterised in that** the occlusal surface is continuously concavely curved in a frontal plane running through the cusps starting from the first gradient via the central fissure to the second gradient.

6. The tooth replacement according to any of the preceding claims, **characterised in that** in all of the frontal planes running through the central fissure the maximum slope angle of the first and/or of the second gradient with respect to a transverse plane is less than 40°, preferably les than 35°, in particular less than 30° and/or more than 20°, preferably more than 25°.

7. The tooth replacement according to any of the preceding claims, **characterised in that** in all of the frontal planes running through the central fissure, the distance between the base of the central fissure and the transverse plane running through the highest cusp tip is greater than 0.3 mm, preferably greater than 0.4 mm, in particular greater than 0.5 mm and smaller than 1.5 mm, preferably smaller than 1 mm.

8. The tooth replacement according to any of the preceding claims, **characterised in that** the distance between the two cusp tips is more than 4 times, preferably more than 5 times, in particular more than 6 times as great and less than 15 times, preferably less than 10 times as great as the distance between a transverse plane running through the base of the tooth pit and a transverse plane running through the highest cusp.

9. The tooth replacement according to any of the preceding claims, **characterised in that** in a frontal plane running through the base of the tooth pit the radius of curvature of the occlusal surface increases at least in sections starting from the base of the tooth pit in the direction of the edge of the tooth pit.

10. The tooth replacement according to any of the preceding claims, **characterised in that** the length of the protrusion path starting from the occlusion position is 0.4 mm to 0.6 mm.

11. The tooth replacement according to Claim 10, **characterised in that** in the occlusion position the cusp of the antagonist touches the occlusal surface of the posterior tooth in the region of the tooth pit, not in a pointwise but in a planar manner, the contact surface preferably being more than 0.5 mm², particularly preferably more than 1 mm² and/or less than 3 mm², preferably less than 2 mm².

12. The tooth replacement according to any of the preceding claims, **characterised by** an adjacent tooth of the posterior tooth that has a further mesial (distal) contact surface that rests against the distal (mesial) contact surface of the posterior tooth, the further mesial (distal) contact surface of the adjacent tooth being curved concavely spherically in order to establish a form-fit contact with the convexly curved distal (mesial) contact surface of the posterior tooth, i.e. having a concave edge both in a sagittal sectional plane and in a transverse sectional plane.

13. The tooth replacement according to Claim 12, **characterised in that** the radius of curvature of the convexly curved contact surface of the posterior tooth corresponds approximately to the radius of curvature of the concavely curved further contact surface of the adjacent tooth.

14. The tooth replacement according to any of the preceding claims, **characterised in that** the tooth neck of the posterior tooth is offset such that between a tooth crown and a tooth root a recessed shoulder is formed, the shoulder preferably running around the entire periphery of the posterior tooth.

15. The tooth replacement according to any of Claims 1 to 11, **characterised by** at least two teeth arranged next to one another, in particular molars and/or premolars, one of which having a mesial contact surface can be positioned against a distal contact surface of another tooth, the mesial (distal) contact surface being curved convexly in a calotte-like or spherical manner, i.e. having a convex edge both in a sagittal sectional plane and in a transverse sectional plane, and the distal (mesial) contact surface being curved concavely spherically in order to establish a form-fit contact with the convexly curved contact surface, i.e. having a concave edge in both a sagittal sectional plane and in a transverse sectional plane.

## Revendications

1. Prothèse dentaire comportant au moins une dent latérale présentant une surface de contact mésiale, une surface de contact distale et une surface occlusale ; la surface occlusale présentant au moins une cuspide buccale possédant une pointe de cuspide buccale, une cuspide linguale possédant une pointe de cuspide linguale, une fissure centrale traversant la surface occlusale dans le sens mésio-distal entre les deux cuspides et possédant au moins un sillon dentaire, une première partie inclinée descendant de la pointe de cuspide buccale en direction de la fissure centrale et une seconde partie inclinée descendant de la pointe de cuspide linguale en direction de la fissure centrale ; la surface de contact mésiale, la surface de contact distale et/ou la surface occlusale présentant des espaces libres permettant de maintenir un guidage occlusal dynamique; la surface de contact distale et/ou mésiale étant bombée en forme de calotte ou de sphère, en étant ainsi à contour convexe aussi bien dans un plan de coupe sagittale que dans un plan de coupe transversale, **caractérisée par** une antagoniste de la dent latérale présentant une autre surface occlusale possédant au moins une autre cuspide qui, dans une position d'occlusion, s'emboîte dans le sillon dentaire de la surface occlusale de la dent latérale, la longueur du mouvement de rétrusion en partant de la position d'occlusion faisant d'au moins 0,6 mm à 0,8 mm.

2. Prothèse dentaire selon la revendication 1, **caractérisée en ce que** les espaces libres sont conçus sous la forme de profilages orientés dans le sens de la normale à un plan tangentiel appliqué sur la surface de contact distale, la surface de contact mésiale et/ou la surface occlusale.

3. Prothèse dentaire selon la revendication 1 ou 2, **caractérisée en ce que**, dans tous les plans frontaux passant par la fissure centrale, le rayon de courbure de la surface occlusale au fond de la fissure centrale est supérieur à un septième, de préférence supérieur à un cinquième, plus préférablement supérieur à un quart de l'écart séparant les deux pointes de cuspide afin d'assurer une transition plus douce entre la première partie inclinée, la fissure centrale et la seconde partie inclinée.

4. Prothèse dentaire selon la revendication 3, **caractérisée en ce que**, dans tous les plans de coupe parallèles à l'axe de la dent et passant par le fond du sillon dentaire, le rayon de courbure de la surface occlusale au fond du sillon dentaire est supérieur à 1,2 mm, de préférence supérieur à 2 mm et/ou inférieur à 5 mm, de préférence inférieur à 4 mm.

5. Prothèse dentaire selon l'une des revendications précédentes, **caractérisée en ce que**, dans un plan frontal passant par les cuspides, la surface occlusale présente une forme concave ininterrompue partant de la première partie inclinée jusqu'à la second partie inclinée, en passant par la fissure centrale.

6. Prothèse dentaire selon l'une des revendications précédentes, **caractérisée en ce que**, dans tous les plans frontaux passant par la fissure centrale, l'angle de pente maximal de la première et/ou de la seconde partie inclinée par rapport à un plan transversal est de moins de 40°, de préférence de moins de 35°, notamment de moins de 30° et/ou de plus de 20°, de préférence de plus de 25°.

7. Prothèse dentaire selon l'une des revendications précédentes, **caractérisée en ce que**, dans tous les plans frontaux passant par la fissure centrale, l'écart séparant le fond de la fissure centrale et le plan transversal passant par la pointe de cuspide la plus haute est supérieur à 0,3 mm, de préférence supérieur à 0,4 mm, notamment supérieur à 0,5 mm en étant inférieur à 1,5 mm, de préférence inférieur à 1 mm.

8. Prothèse dentaire selon l'une des revendications précédentes, **caractérisée en ce que** l'écart séparant les deux pointes de cuspide est de 4 fois, de préférence de 5 fois, notamment de 6 fois l'écart séparant un plan transversal passant par le fond du sillon dentaire et un plan transversal passant par la cuspide la plus haute, sans dépasser 15 fois et de préférence 10 fois cet écart.

9. Prothèse dentaire selon l'une des revendications précédentes, **caractérisée en ce que**, dans un plan frontal passant par le fond du sillon dentaire, le rayon de courbure de la surface occlusale augmente, au moins par sections, depuis le fond du sillon dentaire vers le bord du sillon dentaire.

10. Prothèse dentaire selon l'une des revendications précédentes, **caractérisée en ce que** la longueur du mouvement de protrusion depuis la position d'occlusion est de 0,4 mm à 0,6 mm.

11. Prothèse dentaire selon la revendication 10, **caractérisée en ce que**, dans la position d'occlusion, la cuspide de l'antagoniste touche la surface occlusale de la dent latérale à proximité du sillon dentaire non pas par points mais de manière plane, cette surface de contact étant de préférence supérieure à 0,5 mm², plus préférablement supérieure à 1 mm² et/ou inférieure à 3 mm², de préférence inférieure à 2 mm².

12. Prothèse dentaire selon l'une des revendications précédentes, **caractérisée par le fait qu'**une dent voisine de la dent latérale présente une autre surface de contact mésiale (distale) bordant la surface de contact distale (mésiale) de la dent latérale, ladite autre surface de contact mésiale (distale) de la dent voisine présentant un bombement sphérique concave pour créer un contact à complémentarité de forme avec la surface de contact distale (mésiale) à bombement convexe de la dent latérale, en étant ainsi à contour concave, aussi bien dans un plan de coupe sagittale que dans un plan de coupe transversale.

13. Prothèse dentaire selon la revendication 12, **caractérisée en ce que** le rayon de courbure de la surface de contact à bombement convexe de la dent latérale correspond sensiblement au rayon de courbure de l'autre surface de contact à bombement concave de la dent voisine.

14. Prothèse dentaire selon l'une des revendications précédentes, **caractérisée en ce que** le collet de la dent latérale présente un déport de manière que, entre la couronne de la dent et sa racine, il est formé un épaulement rentrant, ledit épaulement étant de préférence présent sur tout le pourtour de la dent latérale.

15. Prothèse dentaire selon l'une des revendications 1 à 11, **caractérisée par** au moins deux dents adjacentes, notamment des molaires et/ou prémolaires, dont l'une peut être disposée, par sa surface de contact mésiale, contre une surface de contact distale d'une autre dent, la surface de contact mésiale (distale) présentant un bombement convexe en forme de calotte ou de sphère, en étant ainsi à contour convexe aussi bien dans un plan de coupe sagittale que dans un plan de coupe transversale, et la surface de contact distale (mésiale) présentant un bombement sphérique concave pour créer un contact à complémentarité de forme avec la surface de contact à bombement convexe, en étant ainsi à contour concave, aussi bien dans un plan de coupe sagittale que dans un plan de coupe transversale.
